# FASCICULE DE BREVET EUROPEEN

(11) **EP 1 835 183 B1**
(45) Date de publication et mention de la délivrance du brevet: **01.04.2009**
(21) Numéro de dépôt: 07104008.3
(22) Date de dépôt: 13.03.2007
(51) Int. Cl.: F16B 5/06, F16B 21/07

(54) **Procédé de réalisation d'une rondelle bi-matériau par clipsage d'une première rondelle sur une seconde rondelle réalisée dans une tôle**
Verfahren zur Herstellung einer aus zwei Materialien bestehenden Unterlegscheibe mittels Verklippsung einer ersten Unterlegscheibe auf einer zweiten Unterlegscheibe, welche aus einem Blech hergestellt ist
Method of producing a washer made from two materials by clipping a first washer onto a second washer made from a sheet of metal

(30) Priorité: 17.03.2006 FR 0650921
(43) Date de publication de la demande: 19.09.2007
(73) Titulaire: Valeo Embrayages, 80009 Amiens (FR)
(72) Inventeur: Maingaud, Daniel, 80250, Rouvrel (FR); Poirier, Gaël, 80800, Sailly le Sec (FR)
(74) Mandataire: Doressamy, Clarisse

(56) Documents cités:
- DE-U1- 20 108 408
- GB-A- 2 394 263

## Description

L'invention se rapporte à un procédé de réalisation d'un ensemble par assemblage d'une première pièce sur une seconde pièce réalisée dans une tôle et à un ensemble ainsi réalisé.

En particulier, l'invention se rapporte à un procédé selon le préambule de la revendication 1. Un tel procédé est décrit dans le document GB 2 394 263 A.

Un tel ensemble peut être utilisé notamment dans le domaine des embrayages à friction, et peut comprendre typiquement une rondelle bi-matériau plastique-métal destinée à être placée dans le préamortisseur d'un tel embrayage.

Dans un tel préamortisseur, la rondelle bi-matériau est mise en oeuvre pour exercer un effort de frottement à la fois sur une rondelle en matière plastique, solidaire en rotation de la rondelle de guidage du préamortisseur, et sur une rondelle en métal, solidaire en rotation du voile du préamortisseur.

Il est important que les deux parties formant cette rondelle bi-matériau demeurent solidaires l'une de l'autre notamment lors des différents transports de cette rondelle d'un îlot de montage à un autre. Par ailleurs, pour des raisons d'interférence avec l'environnement, cette tenue doit être obtenue sans créer de forme dépassant de l'épaisseur et du diamètre de la rondelle.

Il est connu d'obtenir ce type de rondelle bi-matériau par collage ou surmoulage de la rondelle en plastique sur la rondelle métallique.

Cependant, ces procédés sont salissants et exigeants pour l'obtention d'une qualité satisfaisante de la rondelle bi-matériau.

Un but de l'invention est donc de proposer un procédé simple, rapide et efficace de réalisation d'un ensemble tel qu'une rondelle bi-matériau par assemblage d'une première pièce sur une seconde pièce réalisée dans une tôle, permettant d'assurer la cohésion entre la première pièce et la seconde pièce notamment pendant les phases de transport de cet ensemble.

On atteint ce but de l'invention au moyen d'un procédé de réalisation d'un ensemble sous la forme d'une rondelle bi-matériau par assemblage d'une première pièce sur une seconde pièce, les deux pièces étant une première rondelle et une seconde rondelle, réalisée dans une tôle, remarquable en ce que :
- on réalise ladite première pièce de manière que ladite première pièce comporte au moins deux projections présentant chacune un bourrelet,
- on réalise dans ladite seconde pièce au moins deux évidements, de manière que lesdits évidements présentent un tombé de découpe, la section de chaque évidement étant sensiblement complémentaire de la section de chaque projection, lesdits évidements et lesdites projections étant aptes à être placés en vis-à-vis,
- on insère en force lesdites projections dans lesdits évidements de manière que lesdits bourrelets prennent appui sur lesdits tombés de découpe.

Ainsi, de manière avantageuse, on réalise un ensemble dont la cohésion est assurée par l'insertion en force des projections dans les évidements. Ces projections sont maintenues en place dans les évidements du simple fait de la présence des bourrelets qui, insérés en force dans les évidements, prennent appui sur le bord tombé de ces évidements.

Facultativement, le procédé selon l'invention comporte idéalement une ou plusieurs des caractéristiques suivantes prises seules ou en combinaison :
- on réalise ladite première pièce par moulage avec démoulage à chaud ;
- on réalise lesdits évidements par poinçonnage en utilisant de préférence un grand jeu entre le poinçon et la matrice ; et
- ladite seconde pièce étant réalisée par emboutissage, on réalise des frappes supplémentaires lors de l'emboutissage de manière à créer, au niveau du tombé de découpe, des formes favorables à l'appui dudit bourrelet sur ledit tombé de découpe.

L'invention se rapporte également à un ensemble obtenu par un procédé conforme à l'invention tel que décrit ci-avant dans toutes ses combinaisons, remarquable en ce que :
- ladite première pièce comporte au moins deux projections présentant chacune un bourrelet ; et
- ladite seconde pièce présente au moins deux évidements réalisés de manière que ces évidements présentent chacun un tombé de découpe,
- la section de chaque évidement est sensiblement complémentaire de la section de chaque projection, chaque projection étant insérée en force dans l'évidement correspondant de manière que chaque bourrelet prenne appui sur le tombé de découpe correspondant.

Facultativement, l'ensemble selon l'invention comporte idéalement une ou plusieurs des caractéristiques suivantes prises en combinaison :
- lesdits bourrelets sont réalisés à l'extrémité libre de chaque projection;
- ladite première pièce est en matière plastique ;
- ladite première pièce est en métal ;
- ladite première pièce est une rondelle sensiblement plane ;
- ladite seconde pièce est une rondelle sensiblement plane ;
- lesdites projections et lesdits évidements sont équirépartis circonférentiellement sur lesdites première et seconde rondelles ;
- une troisième pièce est disposée entre lesdites première et seconde pièces ; et
- ladite troisième pièce comporte une rondelle élastique qui exerce, sur lesdites première et seconde pièce, un effort tendant à écarter lesdites première et seconde pièces l'une de l'autre.

Enfin l'invention se rapporte à un embrayage à friction comportant un préamortisseur d'embrayage, remarquable en ce que le préamortisseur d'embrayage comporte un ensemble tel que décrit ci-avant dans toutes ses variantes.

D'autres caractéristiques et avantages de l'invention apparaîtront à l'examen de la description de modes de réalisation préférés qui va suivre, présentés uniquement à titre d'exemples illustratifs et non limitatifs, en référence aux figures ci-annexées sur lesquelles :
- la figure 1 représente une vue éclatée d'un ensemble conforme à l'invention selon un premier mode de réalisation préféré de l'invention ;
- la figure 2 représente l'ensemble de la figure 1 assemblé ;
- la figure 3 représente une vue en coupe d'un détail de l'ensemble de la figure 2 ;
- la figure 4 représente en coupe une variante de l'ensemble de la figure 3 ;
- la figure 5 représente un deuxième mode de réalisation de l'ensemble selon l'invention ; et
- la figure 6 représente un troisième mode de réalisation de l'ensemble selon l'invention.

Dans la suite de la description, les éléments identiques ou de fonction identique sont repérés, sauf mention contraire, par la même référence numérique.

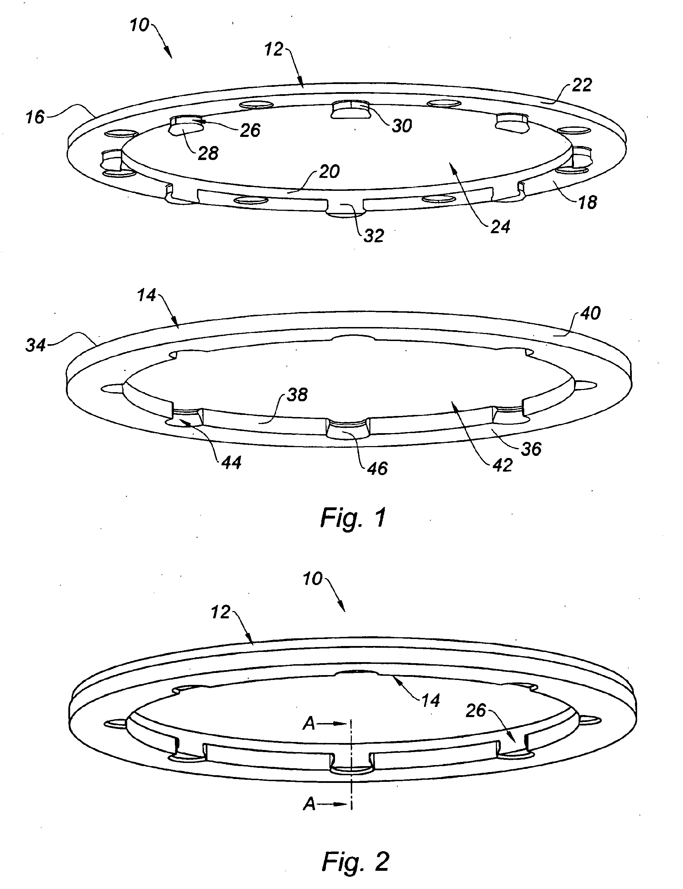

On se réfère désormais à la figure 1, sur laquelle est représentée une vue éclatée d'un ensemble 10 conforme à un premier mode de réalisation préféré de l'invention, en l'espèce une rondelle bimatériau plastique-métal destinée à être mise en oeuvre dans un dispositif de préamortisseur d'un embrayage à friction connu en soi.

Cet ensemble 10 comporte une première pièce 12, en l'espèce une rondelle, clipsée sur une seconde pièce 14, en l'espèce une autre rondelle, réalisée dans une tôle.

La première rondelle 12 est réalisée en matière plastique dans l'exemple de mode de réalisation décrit, mais d'autres types de matériaux sont possibles pour cette première rondelle 12 comme par exemple tout type de métal.

De même, la forme de rondelle de la première pièce 12 de l'exemple de mode de réalisation représenté à la figure 1, n'a aucun caractère limitatif pour l'invention.

La première rondelle 12 comporte une première et une deuxième faces planes 16, 18, respectivement, qui en l'espèce sont sensiblement parallèles et annulaires, ainsi qu'une face radialement interne 20 et une face radialement externe 22. La face radialement interne 20 délimite un évidement 24 cylindrique. La seconde face plane 18 est destinée à être placée en vis-à-vis de la seconde rondelle 14.

Des projections 26, réalisées en l'espèce sous forme de pattes, sont ménagées, idéalement de manière équirépartie circonférentiellement, sur la seconde face 18. Les pattes 26 s'étendent en l'espèce sensiblement perpendiculairement à cette seconde face 18. Les pattes 26 présentent, à leur extrémité libre 28, un bourrelet 30 orienté en direction de la face radialement externe 22 de la première rondelle 12. Les pattes 26 ont, dans un plan perpendiculaire à l'axe de la première rondelle 12, une section sensiblement en forme de croissant, comme cela est représenté sur la figure 1, la face 32 des pattes 26 orientée vers l'évidement 24 ayant une courbure sensiblement égale à la courbure de la face radialement interne 20 de la première rondelle 12. La face 32 des pattes 26 orientée vers l'évidement 24 ne présente pas de bourrelet et forme un prolongement de la face radialement interne 20 de la première rondelle 12. Ainsi, les pattes 26 laissent libre l'espace situé au droit de l'évidement 24.

La seconde rondelle 14 est réalisée dans une tôle métallique et comporte une première et une seconde faces planes 34, 36, respectivement, annulaires et sensiblement parallèles, ainsi qu'une face radialement interne 38 et une face radialement externe 40. La première face plane 34 est destinée à être placée en vis-à-vis de la seconde face plane 18 de la première rondelle 12 de sorte que la seconde face 36 est destinée à être opposée à la première rondelle 12. La face radialement interne 38 de la seconde rondelle 14 délimite un évidement principal 42, dont la section, dans un plan perpendiculaire à l'axe de la seconde rondelle 14, est sensiblement identique à la section, dans un plan perpendiculaire à l'axe de la première rondelle 12, de l'évidement 24 ménagé dans la première rondelle 12, c'est-à-dire, en l'espèce, que l'évidement principal 42 est cylindrique de rayon sensiblement égal au rayon de l'évidement 24 cylindrique ménagé dans la première rondelle 12.

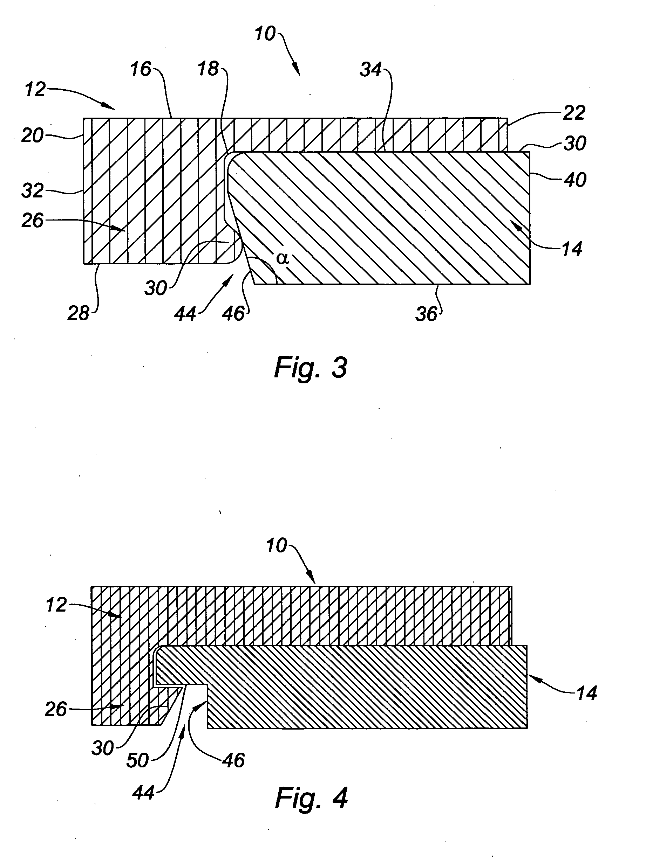

Dans cette seconde rondelle 14, des évidements secondaires 44, en forme d'encoches, sont ménagés dans la face radialement interne 38. Ces encoches 44 ont, dans un plan perpendiculaire à l'axe de la seconde rondelle 14, une section de forme sensiblement complémentaire de la section des pattes 26. Ainsi, en l'espèce, les encoches 44 sont tronconiques Ainsi, sur la figure 3, qui représente, en coupe selon A-A, un détail de l'ensemble 10 de la figure 1, la face interne 46 d'une encoche 44 forme un angle α obtus avec la seconde face plane 36 de la seconde rondelle 14. Ces encoches 44 peuvent être avantageusement réalisées par poinçonnage de la tôle formant la seconde rondelle 14.

La figure 2 représente l'ensemble 10 selon le premier mode de réalisation préféré de l'invention, la première rondelle 12 ayant été clipsée sur la seconde rondelle 14. Avantageusement, on peut prévoir, qu'une fois la première rondelle 12 clipsée sur la seconde rondelle 14, les pattes 26 réalisées sur la première rondelle 12 ne font pas saillie vis-à-vis de la seconde face plane 36 de la seconde rondelle 14 et, qu'au contraire, les pattes 26 sont en retrait par rapport à cette seconde face plane 36 de la seconde rondelle 14. Le clipsage est en effet assuré, comme cela est visible sur la figure 3, par le contact entre les bourrelets 30 des pattes 26 et la face interne 46 des encoches 44 de la seconde rondelle 14. Ainsi, idéalement, la première rondelle 12 est clipsée sur la seconde rondelle 14 sans que les pattes 26 ne fassent saillie hors des encoches 44 du côté de la seconde face plane 36 de la seconde rondelle 14.

L'ensemble 10 peut être réalisé par clipsage de la première rondelle 12 sur la seconde rondelle 14, réalisée dans une tôle, selon le procédé décrit ci-après :
- on réalise la première rondelle 12 de manière que cette première rondelle 12 comporte des pattes 26 présentant chacune un bourrelet 30 à son extrémité libre 28,
- on réalise dans la seconde rondelle 16, par poinçonnage, des encoches 44, de manière que ces encoches 44 présentent un tombé de découpe, c'est-à-dire que la face interne 46 de ces encoches 44 forme un angle obtus α par rapport à la seconde face plane 36 de la seconde rondelle 14 opposée à la première rondelle 12, la section de ces encoches 44, dans un plan perpendiculaire à l'axe de la seconde rondelle 14, étant sensiblement complémentaire de la section des pattes 26, les encoches 44 et les pattes 26 étant aptes à être placés en vis-à-vis,
- on insère en force les pattes 26 dans les encoches 44 de manière que chaque bourrelet 30 prenne appui sur la face interne de l'encoche correspondante 44 formant le tombé de découpe.

Notamment dans le cas où la première rondelle 12 est en matière plastique, on réalise, idéalement, cette première rondelle 12 par moulage avec démoulage à chaud, ce démoulage à chaud permettant de réaliser des pattes 26 présentant un bourrelet 30.

Idéalement, on réalise les encoches 44 par poinçonnage, de préférence en utilisant un grand jeu entre le poinçon et la matrice, de manière que le tombé de découpe soit plus favorable au clipsage, c'est-à-dire que la surface interne 46 des encoches 44 forme un angle α obtus plus grand par rapport à la seconde face plane 36 de la seconde rondelle 14 opposée à la première rondelle 12.

Enfin, selon un mode de réalisation avantageux du procédé selon l'invention, la seconde rondelle 14 est réalisée par emboutissage et on réalise des frappes supplémentaires lors de cet emboutissage de manière à créer, au niveau du tombé de découpe, des formes favorables au clipsage. Avec un tel procédé, il est possible d'obtenir une forme du tombé de découpe comme représenté sur la figure 4 où la surface interne 46 de chaque encoche présente un épaulement 50 apte à coopérer avec le bourrelet 30 de la patte correspondante 26 de manière à assurer un clipsage renforcé de la première rondelle 12 sur la seconde rondelle 14.

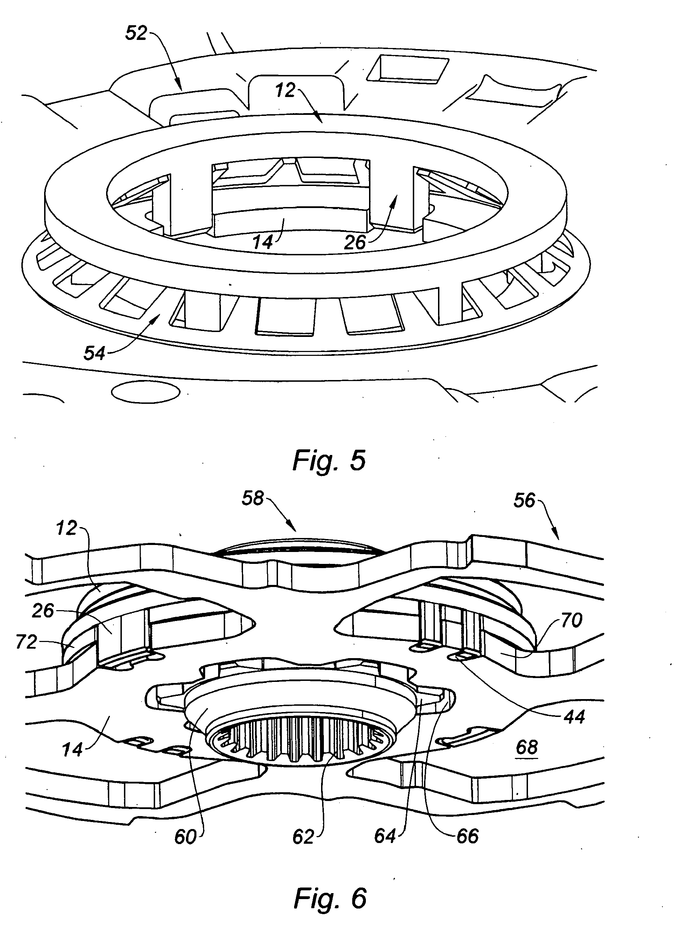

Sur la figure 5, on a représenté un deuxième mode de réalisation 52 de l'ensemble selon l'invention. Sur cette figure 5, une rondelle élastique 54, du type rondelle Belleville, est montée entre la première pièce 12, en l'espèce une rondelle en matière plastique, et la seconde pièce 14, dans ce cas une rondelle métallique. La rondelle élastique 54 permet un clipsage précontraint des rondelles en matière plastique et métallique 12, 14, la rondelle élastique 54 exerçant un effort tendant à écarter les rondelles en matière plastique et métallique 12, 14 l'une de l'autre.

Sur la figure 6, on a représenté un assemblage 56 destiné à un embrayage à friction connu en soi, comportant un troisième mode de réalisation 58 de l'ensemble selon l'invention.

Cet assemblage 56 comporte, plus précisément, un moyeu 60 apte à entraîner en rotation un arbre primaire de la boîte de vitesses au moyen de cannelures internes 62. Ce moyeu 60 est entraîné en rotation par un voile 14 réalisant la seconde pièce de l'ensemble 58 selon l'invention au moyen de dents 64 aptes à coopérer avec des cannelures 66 réalisées sur la face du voile 14 disposés en regard du moyeu 60.

Le voile 14 présente également des évidements 68 aptes à recevoir chacun un ressort d'un dispositif d'amortisseur d'embrayage à friction connu en soi et non représenté ni décrit plus en détails.

Sur la face 70 de ces évidements 68 située radialement à l'intérieur, des encoches 44 sont ménagées de manière à recevoir des pattes 26 d'une première pièce 12 réalisée ici sous la forme d'un coffret de préamortisseur.

Sur cette figure 6, l'ensemble 58 comporte également, entre le coffret de préamortisseur 12 et le voile 14, une rondelle 72 maintenue encastrée par le clipsage du coffret de préamortisseur 12 sur le voile 14.

## Revendications

1. Procédé de réalisation d'une rondelle bi-matériau (10 ; 52 ; 58) par assemblage d'une première rondelle (12) sur une seconde rondelle (14) réalisée dans une tôle, **caractérisé en ce que :**
- on réalise ladite première rondelle (12) de manière que ladite première rondelle (12) comporte au moins deux projections (26) présentant chacune un bourrelet (30),
- on réalise dans ladite seconde rondelle (14) au moins deux évidements (44), de manière que lesdits évidements (44) présentent un tombé de découpe (46), la section de chaque évidement (44) étant sensiblement complémentaire de la section de chaque projection (26), lesdits évidements (44) et lesdites projections (26) étant aptes à être placés en vis-à-vis,
- on insère en force lesdites projections (26) dans lesdits évidements (44) de manière que lesdits bourrelets (30) prennent appui sur lesdits tombés de découpe (46).

2. Procédé selon la revendication 1, **caractérisé en ce qu'**on réalise ladite première rondelle (12) par moulage avec démoulage à chaud.

3. Procédé selon l'une des revendications 1 et 2, **caractérisé en ce qu'**on réalise lesdits évidements (44) par poinçonnage en utilisant de préférence un grand jeu entre le poinçon et la matrice.

4. Procédé selon l'une des revendications 1 à 3, **caractérisé en ce que,** ladite seconde rondelle (14) étant réalisée par emboutissage, on réalise des frappes supplémentaires lors de l'emboutissage de manière à créer, au niveau du tombé de découpe (46), des formes favorables à l'appui dudit bourrelet (30) sur ledit tombé de découpe (46).

5. Rondelle bi-matériau (10 ; 52 ; 58) obtenue par un procédé conforme à l'une quelconque des revendications précédentes, **caractérisée en ce que :**
- ladite première rondelle (12) comporte au moins deux projections (26) présentant chacune un bourrelet (30) ; et
- ladite seconde rondelle (14), réalisée dans une tôle, présente au moins deux évidements (44) réalisés de manière que ces évidements (44) présentent chacun un tombé de découpe (46),
- la section de chaque évidement (44) est sensiblement complémentaire de la section de chaque projection (26), chaque projection (26) étant insérée en force dans l'évidement correspondant (44) de manière que chaque bourrelet (30) prenne appui sur le tombé de découpe correspondant (46).

6. Rondelle bi-matériau selon la revendication 5, **caractérisée en ce que** lesdits bourrelets sont réalisés à l'extrémité libre (28) de chaque projection (26).

7. Rondelle bi-matériau selon l'une des revendications 5 et 6, **caractérisée en ce que** ladite première rondelle (12) est en matière plastique.

8. Rondelle bi-matériau selon l'une des revendications 5 à 7, **caractérisée en ce que** ladite seconde rondelle (14) est en métal.

9. Rondelle bi-matériau selon l'une quelconque des revendications 5 à 8, **caractérisée en ce que** ladite première rondelle (12) est une rondelle sensiblement plane.

10. Rondelle bi-matériau selon l'une quelconque des revendications 5 à 9, **caractérisée en ce que** ladite seconde rondelle (14) est une rondelle sensiblement plane.

11. Rondelle bi-matériau selon les revendications 9 et 10, **caractérisée en ce que** lesdites projections (26) et lesdits évidements (44) sont équirépartis circonférentiellement sur lesdites première et seconde rondelles (12, 14).

12. Rondelle bi-matériau selon l'une quelconque des revendications 5 à 11, **caractérisée en ce qu'**une troisième pièce (54 ; 72) est disposée entre lesdites première et seconde rondelles (12, 14).

13. Rondelle bi-matériau selon la revendication 12, **caractérisée en ce que** ladite troisième pièce (54) comporte une rondelle élastique qui exerce, sur lesdites première et seconde rondelles, un effort tendant à écarter lesdites première et seconde rondelles (12, 14) l'une de l'autre.

14. Embrayage à friction pour véhicule automobile comportant un préamortisseur d'embrayage, **caractérisé en ce que** ledit préamortisseur d'embrayage comporte une rondelle bi-matériau selon l'une quelconque des revendications 5 à 13.

## Claims

1. Method for production of a bi-material washer (10; 52; 58) by assembly of a first washer (12) onto a second washer (14) which is made of a sheet metal, **characterised in that:**
- the said first washer (12) is produced such that the said first washer (12) comprises at least two projections (26), each of which has a flange (30);
- at least two recesses (44) are provided in the said second washer (14), such that the said recesses (44) have a cut-out drop (46), the cross-section of each recess (44) being substantially complementary to the cross-section of each projection (26), the said recesses (44) and the said projections (26) being able to be placed opposite one another; and
- the said projections (26) are forced into the said recesses (44) such that the said flanges (30) are supported on the said cut-out drops (46).

2. Method according to claim 1, **characterised in that** the said first washer (12) is produced by means of moulding with hot mould stripping.

3. Method according to one of claims 1 and 2, **characterised in that** the said recesses (44) are produced by means of punching, preferably using a large amount of play between the punch and the die.

4. Method according to one of claims 1 to 3, **characterised in that,** with the second washer (14) being produced by means of stamping, additional coining is carried out during the stamping, so as to create at the level of the cut-out drop (46) forms which are favourable to the support of the said flange (30) on the said cut-out drop (46).

5. Bi-material washer (10; 52; 58) obtained by a method according to any one of the preceding claims, **characterised in that:**
- the said first washer (12) comprises at least two projections (26), each of which has a flange (30); and
- the said second washer (14), which is made of a sheet metal, has at least two recesses (44) produced such that these recesses (44) each have a cut-out drop (46);
- the cross-section of each recess (44) is substantially complementary to the cross-section of each projection, (26), each projection (26) being forced into the corresponding recess (44) such that each flange (30) is supported on the corresponding cut-out drop (46).

6. Bi-material washer according to claim 5, **characterised in that** the said flanges are provided at the free end (28) of each projection (26).

7. Bi-material washer according to one of claims 5 and 6, **characterised in that** the said first washer (12) is made of plastic material.

8. Bi-material washer according to one of claims 5 to 7, **characterised in that** the said second washer (14) is made of metal.

9. Bi-material washer according to any one of claims 5 to 8, **characterised in that** the said first washer (12) is a substantially flat washer.

10. Bi-material washer according to any one of claims 5 to 9, **characterised in that** the said second washer (14) is a substantially flat washer.

11. Bi-material washer according to claims 9 and 10, **characterised in that** the said projections (26) and the said recesses (44) are regularly distributed circumferentially on the said first and second washers (12, 14).

12. Bi-material washer according to any one of claims 5 to 11, **characterised in that** a third part (54; 72) is disposed between the said first and second washers (12, 14).

13. Bi-material washer according to claim 12, **characterised in that** the said third part (54) comprises a resilient washer which exerts on the said first and second washers a force which tends to space the said first and second washers (12, 14) from one another.

14. Friction clutch for a motor vehicle comprising a clutch pre-damper **characterised in that** the said clutch pre-damper comprises a bi-material washer according to any one of claims 5 to 13.

## Patentansprüche

1. Verfahren zur Herstellung einer aus zwei Materialien bestehenden Scheibe (10; 52; 58) durch Anfügen einer ersten Scheibe (12) auf eine aus einem Blech bestehende zweite Scheibe (14), **dadurch gekennzeichnet, dass:**
- die erste Scheibe (12) derart ausgeführt wird, dass die erste Scheibe (12) mindestens zwei Vorsprünge (26) umfasst, die jeweils einen Wulst (30) aufweisen,
- in der zweiten Scheibe (14) mindestens zwei Ausnehmungen (44) derart ausgeführt werden, dass die Ausnehmungen (44) eine Auskerbung mit abfallender Umrandung (46) bilden, wobei der Querschnitt von jeder Ausnehmung (44) in etwa komplementär zum Querschnitt von jedem Vorsprung (26) ist und wobei die Ausnehmungen (44) und die Vorsprünge (26) geeignet sind, einander gegenüberliegend platziert zu werden,
- die Vorsprünge (26) mit Kraft derart in die Ausnehmungen (44) eingefügt werden, dass die Wülste (30) auf den Auskerbungen mit abfallender Umrandung (46) aufliegen.

2. Verfahren nach Anspruch 1, **dadurch gekennzeichnet, dass** die erste Scheibe (12) durch Pressen mit Entformen bei Hitze ausgeführt wird.

3. Verfahren nach einem der Ansprüche 1 oder 2, **dadurch gekennzeichnet, dass** die Ausnehmungen (44) durch Stanzen ausgeführt werden, wobei vorzugsweise ein großes Spiel zwischen dem Stempel und der Matrize verwendet wird.

4. Verfahren nach einem der Ansprüche 1 bis 3, **dadurch gekennzeichnet, dass** die zweite Scheibe (14) durch Tiefziehen ausgeführt ist, wobei ergänzende Einprägungen bei dem Tiefziehen ausgeführt werden, um auf Höhe der Auskerbung mit abfallender Umrandung (46) Formen zu schaffen, die günstig für die Auflage des Wulstes (30) auf der besagten Auskerbung mit abfallender Umrandung (46) sind.

5. Aus zwei Materialien bestehende Scheibe (10; 52; 58), erhalten durch ein Verfahren nach einem der vorherigen Ansprüche, **dadurch gekennzeichnet, dass:**
- die erste Scheibe (12) mindestens zwei Vorsprünge (26) umfasst, die jeweils einen Wulst (30) aufweisen; und
- die aus einem Blech bestehende zweite Scheibe (14) mindestens zwei Ausnehmungen (44) derart aufweist, dass die Ausnehmungen (44) jeweils eine Auskerbung mit abfallender Umrandung (46) bilden,
- der Querschnitt jeder Ausnehmung (44) in etwa komplementär ist zu dem Querschnitt von jedem Vorsprung (26), wobei jeder Vorsprung (26) mit Kraft in die entsprechende Ausnehmung (44) eingefügt ist, so dass jeder Wulst (30) auf der entsprechenden Auskerbung mit abfallender Umrandung (46) aufliegt.

6. Aus zwei Materialien bestehende Scheibe nach Anspruch 5, **dadurch gekennzeichnet, dass** die Wülste am freien Ende (28) von jedem Vorsprung (26) ausgeführt sind.

7. Aus zwei Materialien bestehende Scheibe nach einem der Ansprüche 5 oder 6, **dadurch gekennzeichnet, dass** die erste Scheibe (12) aus Kunststoff besteht.

8. Aus zwei Materialien bestehende Scheibe nach einem der Ansprüche 5 bis 7, **dadurch gekennzeichnet, dass** die zweite Scheibe (14) aus Metall besteht.

9. Aus zwei Materialien bestehende Scheibe nach einem der Ansprüche 5 bis 8, **dadurch gekennzeichnet, dass** die erste Scheibe (12) eine in etwa ebene Scheibe ist.

10. Aus zwei Materialien bestehende Scheibe nach einem der Ansprüche 5 bis 9, **dadurch gekennzeichnet, dass** die zweite Scheibe (14) eine in etwa ebene Scheibe ist.

11. Aus zwei Materialien bestehende Scheibe nach den Ansprüchen 9 und 10, **dadurch gekennzeichnet, dass** die Vorsprünge (26) und die Ausnehmungen (44) in Umfangsrichtung gleichmäßig verteilt auf der ersten und zweiten Scheibe (12, 14) sind.

12. Aus zwei Materialien bestehende Scheibe nach einem der Ansprüche 5 bis 11, **dadurch gekennzeichnet, dass** ein drittes Teil (54; 72) zwischen die erste und zweite Scheibe (12, 14) eingefügt ist.

13. Aus zwei Materialien bestehende Scheibe nach Anspruch 12, **dadurch gekennzeichnet, dass** das dritte Teil (54) eine elastische Scheibe umfasst, die auf die erste und zweite Scheibe eine Kraft ausübt, welche dazu neigt, die erste und zweite Scheibe (12, 14) voneinander zu entfernen.

14. Reibungskupplung für ein Kraftfahrzeug, umfassend einen Kupplungs-Vordämpfer, **dadurch gekennzeichnet, dass** der Kupplungs-Vordämpfer eine aus zwei Materialien bestehende Scheibe nach einem der Ansprüche 5 bis 13 umfasst.
